# EUROPÄISCHE PATENTANMELDUNG

(11) **EP 1 519 073 A1**
(43) Veröffentlichungstag der Anmeldung: **30.03.2005**
(21) Anmeldenummer: 04020825.8
(22) Anmeldetag: 02.09.2004
(51) Int. Cl.: F16F 7/14, F16F 1/02

(54) **Dämpfungsanordnung mit einer als Dämpfungsglied dienenden Seilschlaufenanordnung**

(30) Priorität: 25.09.2003 DE 10344541
(71) Anmelder: Sebert Schwingungstechnik GmbH, 73230 Kirchheim/Teck (DE)
(72) Erfinder: Sebert, Karl, 73230 Kirchheim/Teck (DE)
(74) Vertreter: Vetter, Hans, Dipl.-Phys.Dr.

(57) **Zusammenfassung**

Es wird eine Dämpfungsanordnung mit zwei Endstücken (11, 12) vorgeschlagen, die über einen als Dämpfungsglied dienenden einzigen geschlossenen Seilstrang (10) miteinander verbunden sind. Die Endstücke (11, 12) besitzen je zwei Einlegestellen (14, 17) zum Einlegen des Seilstrangs (10) im offenen Zustand der Einlegestellen und Mittel zum Verklemmen des Seilstrangs (10) durch Verschließen der Einlegestellen (14, 17), wobei der Seilstrang (10) jeweils abwechselnd von einer Einlegestelle des einen Endstücks (11) zu einer Einlegestelle des anderen Endstücks (12) verläuft. Hierdurch ist eine sehr schnelle und einfache Montage der Dämpfungsanordnung möglich und sind sehr gleichförmige Feder- und Dämpfungseigenschaften gewährleistet.

## Beschreibung

Die Erfindung betrifft eine Dämpfungsanordnung mit zwei Endstücken, die über eine als Dämpfungsglied dienende Seilschlaufenanordnung miteinander verbunden sind.

Bei einer bekannten Dämpfungsanordnung dieser Gattung besitzen die plattenartigen Endstück Einstecklöcher, wobei die Seilenden mehrerer Seilstücke in diese Einstecklöcher eingefädelt und verpresst werden müssen. Das Einfädeln ist dabei sehr aufwendig und arbeitsintensiv, wobei sich auch ungleichförmige Kenndaten ergeben.

Eine Aufgabe der vorliegenden Erfindung besteht darin, eine Dämpfungsanordnung der eingangs genannten Gattung so zu verbessern, dass bei schnellerer Montage gleichförmigere Kenndaten erzielt werden.

Diese Aufgabe wird erfindungsgemäß dadurch gelöst, dass die Seilschlaufenanordnung durch einen einzigen geschlossenen Seilstrang gebildet wird und die Endstücke wenigstens je zwei Einlegestellen zum Einlegen des Seilstrangs im offenen Zustand der Einlegestellen und Mittel zum Verklemmen des Seilstrangs durch Verschließen der Einlegestellen besitzen, wobei der Seilstrang jeweils abwechselnd von einer Einlegestelle des einen Endstücks zu einer Einlegestelle des anderen Kennstücks verläuft.

Die erfindungsgemäße Dämpfungsanordnung hat den Vorteil, dass das umständliche Einfädeln entfällt und der einzige geschlossene Seilstrang lediglich in die Einlegestellen eingelegt zu werden braucht, um dann fixiert zu werden. Die Verwendung eines einzigen geschlossenen Seilstrangs führt jedoch nicht nur zur einfacheren Montage, sondern es können auch gleichförmigere Kenndaten für Federung und Dämpfung erreicht werden. Der geschlossene Seilstrang verläuft sehr gleichmäßig zwischen den Endstücken, wobei ein Lösen von Seilenden in Löchern nicht mehr möglich ist.

Durch die in den Unteransprüchen aufgeführten Maßnahmen sind vorteilhafte Weiterbildungen und Verbesserungen der im Anspruch 1 angegebenen Dämpfungsanordnung möglich.

In einer bevorzugten Ausführungsform besteht wenigstens eines der Endstücke aus zwei aneinander fixierbaren Einzelelementen, wobei die Einlegestellen im montierten Zustand dazwischen angeordnet sind. Diese Einlegestellen sind dabei zweckmäßigerweise als Nuten in beiden Einzelelementen oder nur in einem Einzelelement ausgebildet, die vorzugsweise jeweils quer zur Längsrichtung der Endstücke verlaufen. Dies ermöglicht ein besonders einfaches Einlegen des Seilstrangs vor dem Fixieren der Einzelelemente aneinander.

Die Einzelelemente der Endstücke sind dabei zweckmäßigerweise als Plättchen ausgebildet und können mittels Schrauben oder Nieten oder Hohlnieten oder Tox-Verbindungen oder durch Verklemmen oder Verkleben aneinander fixiert werden.

In einer weiteren vorteilhaften Ausgestaltung der Erfindung ist wenigstens eines der Endstücke mit umbiegbaren Haltelaschen als Mittel zum Verklemmen versehen, wobei die Einlegestellen als Anlagestellen für den Seilstrang an den Haltelaschen ausgebildet sind. Auch hier ist wiederum eine einfache Montage durch Ein- bzw. Anlegen des Seilstrangs an den Haltelaschen möglich, die dann lediglich noch zum Fixieren des Seilstrangs umgebogen werden müssen. Dies kann mit einer geeigneten Biegevorrichtung in einem Arbeitsgang erfolgen.

Eine besonders gute Fixierung und ein besonders einfaches Anlegen des Seilstrangs wird dadurch erreicht, dass die Einlegestellen jeweils durch Anlagestellen an wenigstens zwei nebeneinander angeordneten Haltelaschen gebildet werden.

Die Herstellung wird besonders einfach und kostengünstig, wenn die Haltelaschen einstückig jeweils an einem als Endstück ausgebildeten Blechstück angeformt sind. Derartige Blechstücke können dann beispielsweise durch Stanzen hergestellt werden.

Zur Montage der fertigen Dämpfungsanordnung sind die Endstücke zweckmäßigerweise mit Fixierlöchern versehen.

Besonders günstig hat sich eine Anordnung erwiesen, bei der an jedem Endstück zwei parallele Teilstücke des Seilstrangs beabstandet voneinander fixiert sind, wobei die Teilstücke des einen Endstücks quer zu denen des anderen Teilstücks verlaufen. Dies führt zu einer besonders günstigen Gestalt des als Dämpfungsglied dienenden Seilstrangs.

Zur schnellen und präzisen Montage trägt auch bei, wenn der Seilstrang an vier Stellen, die gleiche Abstände voneinander haben, mit Positionierelementen zum positionsgenauen Einlegen in die Einlegestellen versehen ist.

Besonders günstige Dämpfungseigenschaften werden durch Ausbildung des Seilstrangs als Metalldrahtlitze, insbesondere als Stahldrahtlitze erzielt.

Zwei Ausführungsbeispiele der Erfindung sind in der Zeichnung dargestellt und in der nachfolgenden Beschreibung näher erläutert. Es zeigen:
- Figur 1: eine perspektivischen Darstellung einer Dämpfungsanordnung der Endstücken, die jeweils aus zwei aneinander fixierbaren Einzelelementen bestehen als erstes Ausführungsbeispiel der Erfindung,
- Figur 2: die in Figur 1 dargestellte Dämpfungsanordnung in einer Draufsicht,
- Figur 3: in einer perspektivischen Darstellung ein Endstück mit fixierten Teilstücken des Seilstrangs zur Verwendung bei einer Dämpfungsanordnung gemäß eines zweiten Ausführungsbeispiels der Erfindung,
- Figur 4: dieselbe Anordnung bei noch geöffneten Haltelaschen und dadurch nicht fixierten Teilstücken des Seilstrangs und
- Figur 5: ein Blechstanzteil, aus dem die Endstücke gemäß dem zweiten Ausführungsbeispiel gebildet werden.

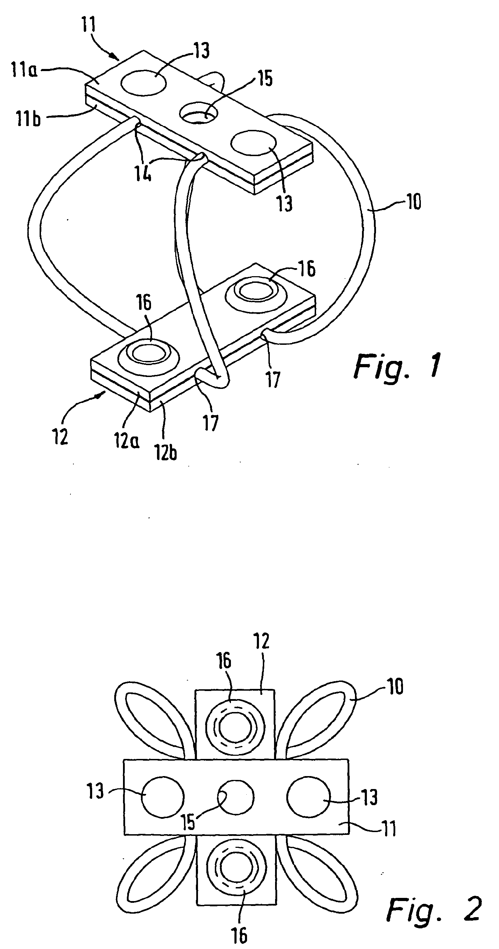

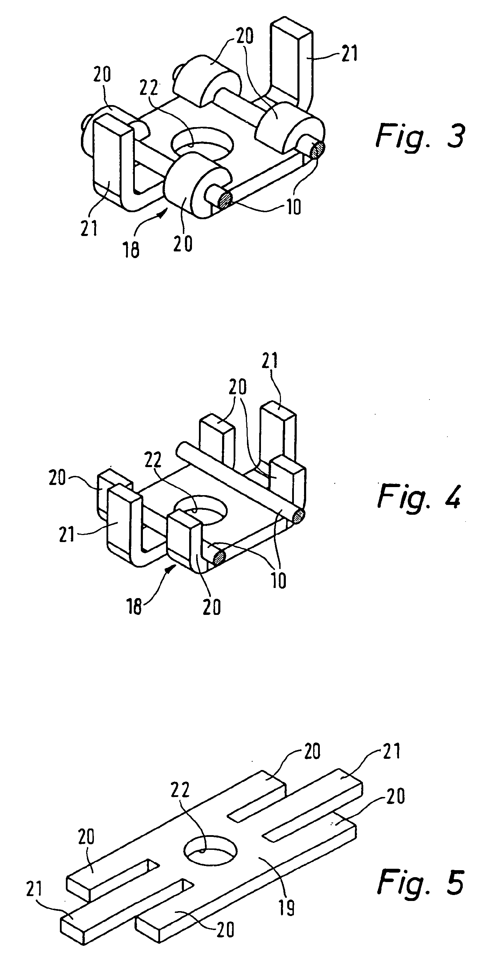

Das in den Figuren 1 und 2 dargestellte erste Ausführungsbeispiel einer Dämpfungsanordnung mit federnden Eigenschaften dient ein einziger geschlossener Seilstrang 10 als Dämpfungsund Federglied. Er ist als Stahldrahtlitze ausgebildet, wobei anstelle von Stahl auch andere Metalle verwendet werden können, die entsprechende Federeigenschaften je nach Einsatzart besitzen. Bei der federnden Bewegung der Dämpfungsanordnung reiben die Metalldrähte der Litze aneinander und sorgen dadurch für die gewünschten Dämpfungseigenschaften. Bei geringeren Anforderungen an die Dämpfungseigenschaften kann der Seilstrang auch als dicker Draht ausgebildet sein.

Der Seilstrang 10 verläuft zwischen zwei Endstücken 11, 12, die jeweils aus zwei plättchenförmigen Einzelelementen 11a, 11b bzw. 12a, 12b bestehen. Die Einzelelemente 11a, 11b sind mittels Nieten 13 aneinanderfixiert und klemmen dabei zwei parallel und quer zur Längsrichtung des Endstücks 11 verlaufende Bereiche des Seilstrangs 10 zwischen sich ein. Hierzu besitzen die Einzelelemente 11a, 11b an ihren einander zugewandten Seiten Quernuten 14 zur Aufnahme der Seilstrangbereiche. Prinzipiell kann auch nur eines der Einzelelemente 11a, 11b mit einer entsprechend tieferen Quernut 14 versehen sein, während das andere Einzelelement keine solche Quernut besitzt. Ein mittiges Befestigungsloch 15 ist zwischen den fixierten Seilstrangbereichen im Endstück 11 angeordnet.

Die beiden Einzelelemente 12a, 12b des anderen Endstücks 12 sind mittels zweier Hohlnieten 16 aneinander befestigt, wobei wiederum zwei parallele Bereiche des Seilstrangs 10 in entsprechender Weise wie beim Endstück 11 dazwischengeklemmt sind. Auch hier dienen wiederum Quernuten 17 zur Aufnahme dieser Bereiche des Seilstrangs 10.

Die beiden im Endstück 11 festgeklemmten Bereiche des Seilstrangs 10 verlaufen quer zu den beiden im Endstück 12 festgeklemmten Bereiche dieses Seilstrangs 10. Dabei verläuft der Seilstrang 10 jeweils abwechselnd von einem Endstück zum anderen Endstück, so dass sich der in den Figuren 1 und 2 dargestellte Verlauf des Seilstrangs 10 ergibt.

In Abwandlung des dargestellten Ausführungsbeispiels können auch alle Nieten als Hohlnieten oder alle Nieten als normale Nieten ausgebildet sein, wobei Befestigungslöcher 15 nach Bedarf auch an beiden Endstücken 11, 12 vorgesehen sein können. Anstelle der Befestigung der Einzelelemente 11a, 11b bzw. 12a, 12b der beiden Endstücke 11, 12 aneinander mittels Nieten können auch andere bekannte Befestigungstechniken treten, zum Beispiel die Befestigung durch Schrauben, Verklemmen, Verstemmen, Tox-Verbindungen, Verkleben und dergleichen. Auch Kombinationen dieser Befestigungstechniken sind möglich.

Bei dem in den Figuren 3 bis 5 dargestellten zweiten Ausführungsbeispiel ist zur Vereinfachung der Darstellung nur eines von zwei Endstücken 18 dargestellt, in dem gemäß Figur 3 zwei parallele Bereiche des Seilstrangs 10 fixiert sind. Der Verlauf des Seilstrangs 10 zwischen zwei solchen Endstücken 18 verläuft gemäß dem ersten Ausführungsbeispiel.

Die Endstücke 18 bestehen aus Blechstanzteilen 19, wobei Figur 5 ein solches Blechstanzteil 19 zeigt. Es ist prinzipiell H-förmig ausgebildet, wobei die vier Schenkel gemäß Figur 4 senkrecht hochgebogen werden und Haltelaschen 20 bilden. Jeweils zwischen zwei Haltelaschen 20 ist ein weiteres bandförmiges Sicherungselement 21 einstückig angeformt, das ebenfalls hochgebogen wird, wobei die beiden Sicherungselemente 21 zur Verdrehsicherung des jeweiligen Endstücks 18 dienen und hierzu in entsprechende, nicht dargestellte Ausnehmungen eines Gegenstücks eingreifen. Im in Figur 4 dargestellten Zustand der Endstücke 18 wird der Seilstrang 10 so eingelegt, dass seine beiden zu fixierenden Bereiche jeweils an zwei hochgebogenen Haltelaschen 20 anliegen, so dass die hochgebogenen Haltelaschen 20 gleichzeitig Einlegestellen zum Einlegen des Seilstrangs 10 bilden. Danach werden die Haltelaschen 20 gemäß Figur 3 umgebogen um dadurch jeweils die beiden parallelen Bereiche des Seilstrangs 10 zu fixieren. Mit einem geeigneten Werkzeug können beispielsweise alle vier Haltelaschen 20 eines Endstücks 18 gleichzeitig umgebogen werden. Ein zentrales Befestigungsloch 22 in den Endstücken 18 dient zu deren Fixierung am nicht dargestellten Gegenstück.

Der Seilstrang 10 wird so in die Endstücke 11, 12 bzw. 18 eingelegt, dass die vier fixierten Bereiche jeweils gleiche Abstände voneinander haben. Um diese Maßgabe beim Einlegen auf einfache Weise exakt erfüllen zu können, kann der Seilstrang in nicht dargestellter Weise an vier Stellen, die gleiche Abstände voneinander haben, mit Einlegehilfen versehen sein, die beispielsweise als Klemmelemente, wie Klemmhülsen ausgebildet sind. Dabei können beispielsweise an jeder Befestigungsstelle zwei solcher Einleghilfen vorgesehen sein, deren Abstand jeweils der Breite eines Endstücks 11, 12 oder eines Endstücks 18 entspricht. Man kann auch nur jeweils eine Einlegehilfe an einer Befestigungsstelle vorsehen, jedoch sollten dann die Endstücke 11, 12 bzw. 18 entsprechende Vertiefungen oder Ausnehmungen zur Aufnahme dieser Einlegehilfen besitzen.

Es sind auch Ausführungen denkbar, bei denen die Endstücke nicht zur Fixierung von nur zwei Bereichen des Seilstrangs, sondern von einer größeren Zahl von Bereichen ausgebildet sind, beispielsweise von vier Bereichen. In diesem Fall verläuft dann der Seilstrang 10 nicht nur gemäß den Ausführungsbeispielen viermal zwischen den Endstücken hin und her, sondern acht mal.

## Patentansprüche

1. Dämpfungsanordnung mit zwei Endstücken, die über eine als Dämpfungsglied dienende Seilschlaufenanordnung miteinander verbunden sind, **dadurch gekennzeichnet, dass** die Seilschlaufenanordnung durch einen einzigen geschlossenen Seilstrang (10) gebildet wird und die Endstücke (11, 12; 18) wenigstens je zwei Einlegestellen (14, 17) und Mittel zum Verklemmen des Seilstrangs (10) durch Verschließen der Einlegestellen besitzen, wobei der Seilstrang (10) jeweils abwechselnd von einer Einlegestelle des einen Endstücks (11; 18) zu einer Einlegestelle des anderen Endstücks (12; 18) verläuft.

2. Dämpfungsanordnung nach Anspruch 1, **dadurch gekennzeichnet, dass** wenigstens eines der Endstücke 11, 12 aus zwei aneinander fixierbaren Einzelelementen (11a, 11b, 12a, 12b) besteht, wobei die Einlegestellen (14, 17) im montierten Zustand dazwischen angeordnet sind.

3. Dämpfungsanordnung nach Anspruch 2, **dadurch gekennzeichnet, dass** die Einlegestellen (14, 17) als Nuten ausgebildet sind, die vorzugsweise jeweils quer zur Längsrichtung der Endstücke (11, 12) verlaufen.

4. Dämpfungsanordnung nach Anspruch 2 oder 3, **dadurch gekennzeichnet, dass** die Einzelelemente (11a, 11b, 12a, 12) als Plättchen ausgebildet sind.

5. Dämpfungsanordnung nach einem der Ansprüche 2 bis 4, **dadurch gekennzeichnet, dass** die Einzelelemente (11a, 11b, 12a, 12b) mittels Schrauben oder Nieten (13) oder Hohlnieten (16) oder Tox-Verbindungen oder durch Verklemmen oder Verkleben aneinander fixierbar sind.

6. Dämpfungsanordnung nach Anspruch 1, **dadurch gekennzeichnet, dass** wenigstens eines der Endstücke (18) mit umbiegbaren Haltelaschen (20) als Mittel zum Verklemmen versehen sind, wobei die Einlegestellen als Anlagestellen für den Seilstrang (10) an den Haltelaschen (20) ausgebildet sind.

7. Dämpfungsanordnung nach Anspruch 6, **dadurch gekennzeichnet, dass** jeweils Anlagestellen an wenigstens zwei nebeneinander angeordneten Haltelaschen (20) Einlegestellen bilden.

8. Dämpfungsanordnung nach Anspruch 6 oder 7, **dadurch gekennzeichnet, dass** die Haltelaschen (20) einstückig jeweils an einem als Endstück ausgebildeten Blechstück angeformt sind.

9. Dämpfungsanordnung nach einem der vorhergehenden Ansprüche, **dadurch gekennzeichnet, dass** die Endstücke (11; 18) mit Fixierlöchern (15; 22) versehen sind.

10. Dämpfungsanordnung nach einem der vorhergehenden Ansprüche, **dadurch gekennzeichnet, dass** an jedem Endstück (11, 12; 18) zwei parallele Teilstücke des Seilstrangs (10) beabstandet voneinander fixiert sind, wobei die Teilstücke an einem Endstück (11; 18) quer zu denen des anderen Teilstücks (12; 18) verlaufen.

11. Dämpfungsanordnung nach einem der vorhergehenden Ansprüche, **dadurch gekennzeichnet, dass** der Seilstrang (10) an vier Stellen, die gleiche Abstände voneinander haben, mit Positionierelementen zum positioniergenauen Einlegen in die Einlegestellen versehen ist.

12. Dämpfungsanordnung nach einem der vorhergehenden Ansprüche, **dadurch gekennzeichnet, dass** der Seilstrang (10) als Metalldrahtlitze ausgebildet ist, insbesondere als Stahldrahtlitze.

13. Dämpfungsanordnung nach einem der vorhergehenden Ansprüche, **dadurch gekennzeichnet, dass** die Endstücke Mittel (21) zur Verdrehsicherung besitzen.
